(19) **Europäisches Patentamt**

**European Patent Office**

**Office européen des brevets**

(11) **EP 1 117 844 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(51) Int Cl.$^7$: **C21B 13/00**, C21B 13/12, C21B 13/14

(21) Anmeldenummer: **99938054.6**

(22) Anmeldetag: **16.08.1999**

(86) Internationale Anmeldenummer:
**PCT/AT99/00200**

(87) Internationale Veröffentlichungsnummer:
**WO 00/020648 (13.04.2000 Gazette 2000/15)**

(54) **VERFAHREN ZUM HERSTELLEN VON EISEN, INSBESONDERE STAHL**

METHOD FOR PRODUCING IRON, ESPECIALLY STEEL

PROCEDE PERMETTANT DE PRODUIR DU FER, NOTAMMENT DE L'ACIER

(84) Benannte Vertragsstaaten:
**DE SE**

(30) Priorität: **07.10.1998 AT 167898**

(43) Veröffentlichungstag der Anmeldung:
**25.07.2001 Patentblatt 2001/30**

(73) Patentinhaber: **VOEST-ALPINE INDUSTRIEANLAGENBAU GMBH 4020 Linz (AT)**

(72) Erfinder:
• **KROPF, Alfred A-4048 Puchenau (AT)**
• **STANDLER, Gerhard A-4020 Linz (AT)**
• **WIESINGER, Horst A-4020 Linz (AT)**

(74) Vertreter: **VA TECH Patente GmbH & Co Stahlstrasse 21 a 4020 Linz (AT)**

(56) Entgegenhaltungen:
**WO-A-98/15662        DE-A- 3 042 239
DE-A- 4 041 689**

• **PATENT ABSTRACTS OF JAPAN vol. 012, no. 050 (C-476), 16. Februar 1988 (1988-02-16) & JP 62 196310 A (KOBE STEEL LTD), 29. August 1987 (1987-08-29)**
• **E.BÄCK ET AL.: "Schmelzreduktion von Eisenoxid mit Wasserstoff in einem Plasmaofen" BHM, Bd. 143, Nr. 5, 1998, Seiten 153-158, XP002124608 in der Anmeldung erwähnt**

**Beschreibung**

Die Erfindung betrifft ein Verfahren zum Herstellen von Eisen, insbesondere Stahl, aus eisenhältigen Oxiden durch eine $H_2$-Schmelzreduktion in einem Schmelzgefäß unter Zufuhr von $H_2$-hältigem Gas und von Energie.

Ein Verfahren dieser Art ist in der Veröffentlichung WO98/15662 A1 beschrieben. Dabei wird Metalloxid durch Erdgas reduziert und aufgeschmolzen. Das Metalloxid wird in mindestens einem oder zwei Vorreduktionsreaktoren mittels eines aus einem nachgeordneten Schmelzreduktionsreaktor abgezogenen Reduktionsgases vorreduziert. Dem Schmelzreduktionsreaktor wird Erdgas zugeführt, welches dort teilverbrannt wird und als Reduktionsgas dient.

Ein Verfahren bei dem Einsenoxid mittels eines Wasserstoff-Argon-Gemisches unter Zufuhr von elektrischer Energie reduziert wird, ist beschrieben in "Schmelzreduktion von Eisenoxid mit Wasserstoff in einem Plasmaofen" von E. Bäck und H. Hiebler in BHM, 143 Jg. (1998), S. 153 bis 158. Bei diesem bekannten Verfahren werden eisenhältige Oxide in einem Plasmaofen mittel eines $H_2$- und Ar-hältigen Gases als Reduktionsgas, wobei der $H_2$-Gehalt zwischen 15% und 45% beträgt, und mittels elektrischer Energie aufgeschmolzen und zu Eisen reduziert.

Die Reduktion läuft hierbei wie folgt ab:

$$Fe_2O_3 + 3\,H_2 \rightarrow 2\,Fe + 3\,H_2O$$

bzw.

$$FeO + H_2 \rightarrow Fe + H_2O$$

Nachteilig ist bei diesem bekannten Verfahren der relativ geringe Wasserstoff-Ausnutzungsgrad, der insbesondere bei hohen Wasserstoffgehalten unter 50% liegt. Zudem wird durch die endotherme $H_2$-Reduktion der eisenhältigen Oxide eine hohe Energiezufuhr benötigt, um die für die Reduktion erforderliche Reaktionstemperatur sicherzustellen.

Die Erfindung setzt sich die Vermeidung der oben angeführten Schwierigkeiten und Nachteile zum Ziel und stellt sich die Aufgabe, ein Verfahren zum Herstellen von Eisen bzw. Stahl aus eisenhältigen Oxiden durch eine ausschließliche $H_2$-Schmelzreduktion zu schaffen, bei dem der Ausnutzungsgrad des thermischen und chemischen Potentials des eingesetzten $H_2$-hältigen Gases möglichst hoch und die von außen zugeführte Energiemenge möglichst gering ist.

Diese Aufgabe wird bei einem Verfahren der eingangs beschriebenen Art durch die Kombination folgender Maßnahmen gelöst:

• Vorwärmen und Vorreduzieren der eisenhältigen Oxide in mindestens einer Vorwärm-und Vorreduktionszone mittels eines $H_2$- und $H_2O$-hältigen Gases, welches aus dem Schmelzgefäß abgezogen und, gegebenenfalls nach Zumischen eines mehr als 50%, vorzugsweise mehr als 90%, $H_2$ enthaltenden Gases, der Vorwärm- und Vorreduktionszone zugeführt wird,

• Einbringen der vorgewärmten und vorreduzierten eisenhältigen Oxide in das Schmelzgefäß, und

• Einschmelzen und Fertigreduzieren der eisenhältigen Oxide im Schmelzgefäß unter einem mehr als 90%, $H_2$ enthaltenden Gas.

Hierbei wird flüssiges Eisen, insbesondere flüssiger Stahl, gebildet. Weiters wird $H_2O$ gebildet, das aus dem Schmelzgefäß in Form von Dampf abgezogen wird.

Als eisenhältige Oxide kommen fiir das erfindungsgemäße Verfahren in erster Linie $Fe_2O_3$, $Fe_3O_4$ und FeO in Betracht.

Im Schmelzgefäß stellt sich ein dynamisches Gleichgewicht zwischen flüssigem Eisen bzw. Stahl, flüssiger Schlacke, welche im wesentlichen aus FeO und Gangart ($SiO_2$, $Al_2O_3$, CaO, MgO, Mn-, P- und S-Verbindungen etc.) der eingesetzten eisenhältigen Oxide besteht, sowie $H_2$ und $H_2O$ ein. Durch Zuführen von vorgewärmten und vorreduzierten eisenhältigen Oxiden, im wesentlichen einer Mischung aus FeO und $Fe_3O_4$, aus der Vorwärm- und Vorreduktionszone sowie von Wasserstoff wird weiteres flüssiges Eisen bzw. flüssiger Stahl gebildet, welches bzw. welcher mit gasförmigem $O_2$ gesättigt ist. Bei 1600°C Schmelzentemperatur liegt die Sättigung beispielsweise bei etwa 0,2% $O_2$.

Ein Vorteil des erfindungsgemäßen Verfahrens gegenüber dem bekannten Verfahren liegt darin, daß die im $H_2$- und $H_2O$-hältigen Gas enthaltene Energie zum Vorwärmen und Vorreduzieren der eisenhältigen Oxide eingesetzt wird, wobei gegebenenfalls mehr als 50%, vorzugsweise mehr als 90%, $H_2$ enthaltendes Gas zugemischt wird, um die zur Vorreduktion der eisenhältigen Oxide erforderliche Gaszusammensetzung und -temperatur einzustellen.

Das aus dem Schmelzgefäß abgezogene $H_2$- und $H_2O$-hältige Gas wird beim erfindungsgemäßen Verfahren - im Gegensatz zum Stand der Technik - nicht unter Verlust der ihm innewohnenden Energie gekühlt, sondern wird für die endotherme Vorreduktion der eisenhältigen Oxide, im wesentlichen $Fe_2O_3$, zu FeO und $Fe_3O_4$ eingesetzt. Der Grad der Vorreduktion ist hierbei vom Druck, der Temperatur und der Verweildauer der eisenhältigen Oxide in der Vorwärm- und Vorreduktionszone abhängig.

Da weiters beim erfindungsgemäßen Verfahren dem Schmelzgefäß bereits vorgewärmtes und vorreduziertes Material zugeführt wird, ist der für das Aufschmelzen und die Fertigreduktion erforderliche Energiebedarf gegenüber dem Stand der Technik reduziert.

Vorzugsweise werden die eisenhältigen Oxide mittels elektrischer Energie eingeschmolzen.

Als $H_2$-hältiges Gas wird bevorzugt, abgesehen von Verunreinigungen, 100% $H_2$ eingesetzt. Das Gas kann jedoch auch einen gewissen CO-Anteil bzw. Kohlenwasserstoff-Anteil aufweisen, was insbesondere bei der Herstellung von Roheisen in Betracht kommt.

Vorzugsweise werden die eisenhältigen Oxide im Schmelzgefäß kontinuierlich reduziert und eingeschmolzen und weiters bevorzugt das flüssige Eisen bzw. der flüssige Stahl kontinuierlich aus dem Schmelzgefäß ausgebracht.

Eine bevorzugte Ausführungsform des erfindungsgemäßen Verfahrens ist dadurch gekennzeichnet, daß aus der Vorwärm- und Vorreduktionszone austretendes $H_2$- und $H_2O$hältiges Topgas in den Prozeß rückgeführt wird. Durch diese Maßnahmen gelingt einerseits die Ausnutzung der chemischen Energie des im Topgas noch vorhandenen $H_2$. Andererseits kann die im Topgas noch vorhandene Wärme an das dem Schmelzgefäß frisch zugeführte $H_2$hältige Gas abgegeben werden.

Das Topgas wird vor dem Rückführen in den Prozeß vorzugsweise gereinigt, insbesondere entstaubt, wobei die Staubanteile in das Schmelzgefäß eingebracht werden können.

Gemäß einer bevorzugten Ausführungsform des erfindungsgemäßen Verfahrens wird das $H_2$hältige Gas mittels eines Reformers durch Reformieren von Erdgas mit Wasserdampf hergestellt. Hierbei werden nach der bekannten Dampfreformer-Reaktion

$$CH_4 + H_2O \rightarrow 3\,H_2 + CO$$

zunächst $H_2$ und CO gebildet. Das CO wird in einer an die Dampfreformierung anschließende CO-Shift-Reaktion

$$CO + H_2O \rightarrow H_2 + CO_2$$

zu $H_2$ und $CO_2$ umgewandelt, worauf das $CO_2$ durch Gaswäsche oder -adsorption entfernt wird. Es steht nunmehr ein im wesentlichen ausschließlich $H_2$-hältiges Gas zur Verfügung.

Vorzugsweise wird das Topgas in den Reformer eingeleitet und der Wasserdampf des Topgases im Reformer mit dem Erdgas umgesetzt.

Gemäß einer weiteren bevorzugten Ausführungsform des erfindungsgemäßen Verfahrens wird das $H_2$-hältige Gas durch autotherme Kohlevergasung bzw. nach einer noch anderen bevorzugten Ausführungsform durch allotherme Kohlevergasung hergestellt, wobei das Topgas gegebenenfalls in einen Kohlevergasungsreaktor eingeleitet und der Wasserdampf des Topgases mit Kohle umgesetzt wird.

Das $H_2$-hältige Gas kann aber auch aus anderen Quellen stammen, beispielsweise aus einem technisch umsetzbaren chemischen Prozeß, einem biologischen Prozeß oder aus einer Elektrolyse. Gegebenenfalls wird hierbei das $H_2O$ aus dem Topgas entfernt, z. B. durch Auskondensieren, und das so gereinigte Gas wird mit frisch zugeführtem $H_2$-hältigen Gas vermischt.

Vorteilhaft wird ein Teil des Topgases in das der Vorwärm- und Vorreduktionszone zugeführte Gas rückgeführt. Hierdurch ergeben sich Möglichkeiten der Einstellung der Temperatur, der Menge und des Staubgehalts des der Vorwärm- und Vorreduktionszone zugeführten Gases. Zweckmäßigerweise wird das rückgeführte Topgas oxidativ erwärmt.

Gemäß einer bevorzugten Ausführungsform wird im Schmelzgefäß mittels des $H_2$-hältigen Gases und elektrischer Energie ein Plasma erzeugt. Hiermit lassen sich die höchsten Temperaturen im Schmelzgefäß von etwa 2000°C erzielen. Elektrische Energie kann in das Schmelzgefäß jedoch ebenso durch Induktion oder durch einen elektrischen Lichtbogen eingebracht werden.

Vorzugsweise werden bei einer Herstellung von Stahl dem flüssigen Stahl in situ im Schmelzgefäß und/oder beim Ausbringen des Stahls aus dem Schmelzgefäß Additive, insbesondere Legierungselemente, zugegeben. Weiters wird der Stahl bevorzugt beim Ausbringen aus dem Schmelzgefäß überhitzt, desoxidiert, feinlegiert und vakuumbehandelt. Dabei kann das Überhitzen, Desoxidieren, Feinlegieren und Vakuumbehandeln entsprechend der gewünschten Stahlqualität, sowie das Einstellen der erforderlichen Gießtemperatur erfolgen. Unter Umständen ist ein weiteres Erwärmen des Stahls mittels chemischer oder elektrischer Energie erforderlich.

Der flüssige Stahl kann kontinuierlich mindestens einer Stranggießanlage zugeführt und kontinuierlich vergossen werden.

Die Schmelze kann auch aufgekohlt werden, wobei flüssiges Roheisen entsteht.

Beim erfindungsgemäßen Verfahren wird das $H_2$-hältige Gas dem Schmelzgefäß vorzugsweise mit einer Temperatur von etwa 400°C bis 900°C und einem Druck von maximal etwa 15 bar zugeführt.

Das $H_2$- und $H_2O$-hältige Gas wird aus dem Schmelzgefäß bevorzugt mit einer Temperatur von etwa 1600°C und einer Zusammensetzung von etwa 60% $H_2$ und etwa 40% $H_2O$ abgezogen. Zweckmäßigerweise wird dem Gas kühles $H_2$-hältiges Gas zugemischt.

Vorteilhaft wird das $H_2$- und $H_2O$-hältige Gas der Vorwärm- und Vorreduktionszone mit einer Temperatur von etwa 800°C bis 1000°C, vorzugsweise etwa 850°C, und mit einer Zusammensetzung von etwa 80% $H_2$ und etwa 20% $H_2O$ zugeführt.

Bevorzugt wird das Topgas aus der Vorwärm- und Vorreduktionszone mit einer Temperatur von etwa 400°C bis 500°C, vorzugsweise etwa 450°C, und mit einer Zusammensetzung von etwa 60% $H_2$ und etwa 40% $H_2O$ abgezogen.

Eine Anlage zur Durchführung des erfindungsgemäßen Verfahrens, mit einem Schmelzgefäß, das Zuleitungen für eisenhältige Oxide und für ein $H_2$-hältiges Gas, eine Zufülrrung für Energie und Ableitungen für flüssiges Eisen, insbesondere flüssigen Stahl, für flüssige Schlacke und für ein $H_2$- und $H_2O$-hältiges Gas aufweist, ist dadurch gekennzeichnet, daß die Ableitung für das $H_2$- und $H_2O$-hältige Gas, gegebenenfalls nach Zusammenmünden mit einer Leitung für das $H_2$-hältige Gas, in mindestens einen Vorwärm- und Vorreduktionsreaktor zum Vorwärmen und Vorreduzieren der eisenhältigen Oxide einmündet, von dem die Zuleitung für vorgewärmte und vorreduzierte eisenhältige Oxide zum Schmelzgefäß und eine Ableitung für $H_2$- und $H_2O$-hältiges Topgas ausgeht.

Vorzugsweise weist das Schmelzgefäß eine Zuführung für elektrische Energie auf.

Eine bevorzugte Ausführungsform der Anlage ist dadurch gekennzeichnet, daß die Topgas-Ableitung mit einer Einrichtung zum Herstellen frischen $H_2$-hältigen Gases, insbesondere einem Reformer oder einem Kohlevergasungsreaktor, verbunden ist.

Eine weitere bevorzugte Ausführungsform ist dadurch gekennzeichnet, daß die Topgas-Ableitung unter Zwischenschaltung einer Einrichtung zum Entfernen von $H_2O$ aus dem Topgas mit der Zuleitung für das $H_2$-hältige Gas zum Schmelzgefäß verbunden ist.

Weiters ist es bevorzugt, wenn die Topgas-Ableitung über eine Zweigleitung mit der in den Vorwärm- und Vorreduktionsreaktor mündenden Leitung für $H_2$- und $H_2O$-hältiges Gas verbunden ist.

In der Topgas-Ableitung ist zweckmäßigerweise eine Gasreinigungseinrichtung, insbesondere eine Entstaubungseinrichtung, vorgesehen.

Das Schmelzgefäß umfaßt vorzugsweise eine Ausbringeinrichtung für das flüssige Eisen bzw. den flüssigen Stahl, in welche Legierungselemente und Additive zuführbar sind. Die Ausbringeinrichtung ist vorteilhaft als Induktionsförderrinne ausgebildet.

Vorzugsweise ist dem Schmelzgefäß mindestens eine Stranggießanlage nachgeordnet.

Ein besonderer Aspekt der Erfindung liegt darin, daß der gesamte Stahlherstellungsprozeß, und zwar ausgehend von der Reduktion eisenhältiger Oxide bis zur Zugabe von Legierungselementen, im wesentlichen kontinuierlich im Verbund von Gas- und Schmelzreduktion abläuft.

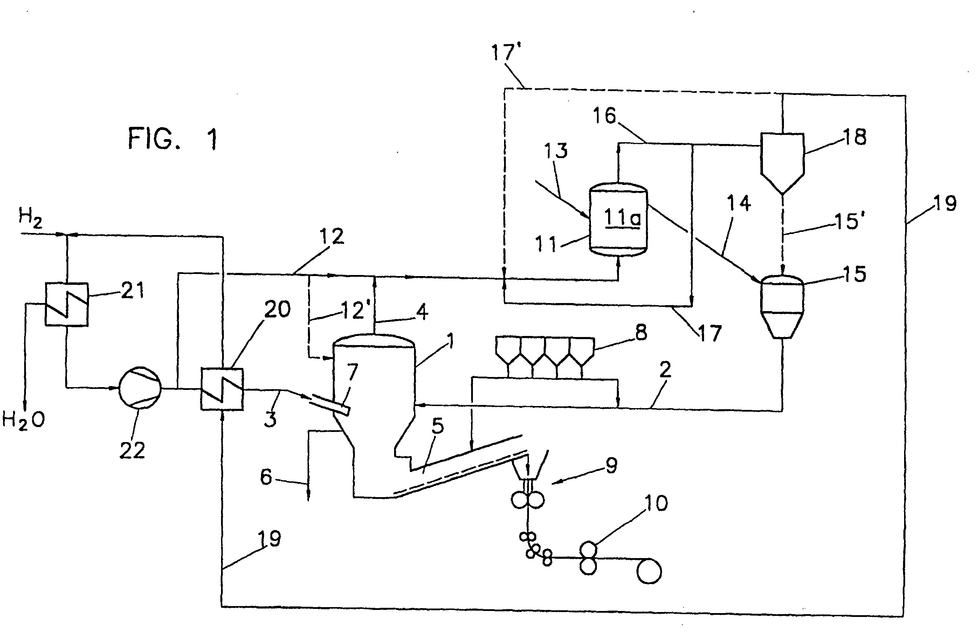

Die Erfindung ist nachfolgend anhand der Zeichnung (Figuren 1 bis 4) näher erläutert, wobei die Figuren schematisch bevorzugte Ausführungsformen der Anlage darstellen.

In Fig. 1 ist ein Schmelzgefäß 1 dargestellt, in welches eine Zuleitung 2 für eisenhältige Oxide und eine Zuleitung 3 für ein $H_2$-hältiges Gas münden und von dem eine Ableitung 4 für ein $H_2$- und $H_2O$-hältiges Gas ausgeht. Das Schmelzgefäß 1 umfaßt weiters eine Ausbringeinrichtung 5 für flüssiges Eisen, im gezeigten Beispiel flüssigen Stahl, und einen Abstich 6 für flüssige Schlacke.

Die Zuleitung 3 für $H_2$-hältiges Gas umfaßt im gezeigten Ausführungsbeispiel einen Plasmabrenner 7, über den in das Schmelzgefäß 1 nicht nur das $H_2$-hältige Gas, sondern auch elektrische Energie eingebracht wird. Im gezeigten Ausführungsbeispiel weist das $H_2$-hältige Gas 100% $H_2$ auf. Hierbei sind technisch bedingte Verunreinigungen nicht berücksichtigt. Je nach Herstellungsmethode des $H_2$-hältigen Gases nehmen diese einen geringen Prozentsatz ein. Im Schmelzgefäß 1 werden in einem durch Zufuhr von $H_2$ und elektrischer Energie gebildeten Plasma die eisenhältigen Oxide eingeschmolzen und zu flüssigem Eisen bzw. Stahl reduziert. Durch das Plasma werden im Schmelzgefäß 1 Temperaturen von etwa 2000°C erreicht. Der Einschmelz- und Reduktionsvorgang läuft folgendermaßen ab:

Mittels der weiter unten beschriebenen Verfahrensschritte vorgewärmte und vorreduzierte eisenhältige Oxide, im wesentlichen FeO und $Fe_3O_4$, werden durch $H_2$ reduziert, wobei Wasserdampf gebildet wird. Die Reduktion läuft für FeO beispielhaft nach folgendem Reaktionsschema ab:

$$FeO + H_2 \rightarrow Fe + H_2O$$

Die Reduktion von $Fe_3O_4$ erfolgt nach folgender Gleichung:

$$Fe_3O_4 + 4\,H_2 \rightarrow 3\,Fe + 4\,H_2O$$

Im Schmelzgefäß 1 stellt sich ein dynamisches Gleichgewicht zwischen flüssigem Eisen und flüssiger Schlacke sowie zwischen $H_2$ und $H_2O$ ein. Die Schlacke besteht im wesentlichen aus geschmolzenem FeO, sowie weiters aus $SiO_2$, $Al_2O_3$, CaO, MgO, Mn-, P- und S-Verbindungen etc., welche aus der die eisenhältigen Oxide begleitenden Gangart herrühren.

Durch Zugabe, vorzugsweise kontinuierliche Zugabe, von weiterem FeO bzw. $Fe_3O_4$ in das Schmelzgefäß 1 wird weiteres flüssiges Eisen gebildet, welches, vorzugsweise ebenfalls kontinuierlich, über die Ausbringeinrichtung 5 abgezogen wird.

Beim gezeigten Beispiel werden dem flüssigen Eisen Additive zugesetzt, so daß flüssiger Stahl gebildet wird. Der flüssige Stahl ist bei den gegebenen Reaktionsbedingungen mit Sauerstoff gesättigt, wobei die Sättigung bei 1600°C Schmelzentemperatur bei etwa 0,2% $O_2$ liegt.

Während des Abziehens über die Ausbringeinrichtung 5, welche im gezeigten Ausführungsbeispiel als Induktionsförderrinne ausgebildet ist, wird der flüssige Stahl überhitzt, desoxidiert, feinlegiert und vakuumbehandelt. Dies geschieht durch Zufuhr von Energie und Zuschlagstoffen, welche aus den Vorratsbunkern 8 in die Induktionsförderrinne 5 eingebracht werden. Die Vorratsbunker 8 enthalten beispielsweise Desoxidationsmittel und Legierungselemente, die in der gewünschten Menge zudosiert werden. Die Zuschlagstoffe können auch, wie in Fig. 1 dargestellt, bereits in die Zuleitung 2 dosiert werden.

Weiters ist es möglich, als Zuschlagstoffe Kohlenstoffträger zuzuführen, so daß im Schmelzgefäß 1 flüssiges Roheisen gebildet wird.

Der aus dem Schmelzgefäß 1 über die Ausbringeinrichtung 5 abgezogene flüssige Stahl wird beim gezeigten Ausführungsbeispiel in einer oder mehreren Stranggießanlagen 9 kontinuierlich vergossen, und zwar zu Brammen, Vorblöcken, Knüppeln, Dünnbrammen oder Bändern, und gegebenenfalls on-line mittels einer Walzeinrichtung 10 gewalzt.

Bei der Reduktion der eisenhältigen Oxide im Schmelzgefäß 1 wird Wasserdampf gebildet, welcher gemeinsam mit bei der Reduktion nicht umgesetztem $H_2$ über die Ableitung 4 aus dem Schmelzgefäß 1 mit einer Temperatur von beispielsweise etwa 1600°C abgezogen wird. Dieses $H_2$- und $H_2O$-hältige Gas, welches beispielsweise einen $H_2$-Gehalt von etwa 60% und einen $H_2O$-Gehalt von etwa 40% aufweist, wird mindestens einem Vorwärm- und Vorreduktionsreaktor 11 zugeführt. Im gezeigten Ausführungsbeispiel ist ein einziger Vorwärm- und Vorreduktionsreaktor 11 dargestellt, in dem eine Vorwärm- und Vorreduktionszone 11a ausgebildet ist. Erfindungsgemäß können jedoch auch mehrere Vorwärm- und Vorreduktionsreaktoren 11 vorgesehen sein.

Dem $H_2$- und $H_2O$-hältigen Gas wird über eine Leitung 12 kühles $H_2$-hältiges Gas zugemischt, das - abhängig vom Druck - eine Temperatur von etwa 100°C aufweist, um das Reduktionsvermögen des dem Vorwärm- und Vorreduktionsreaktor 11 zugeführten Gases zu erhöhen und die Temperatur des Gases auf einen Wert im Bereich von 800°C bis maximal 1000°C, beispielsweise etwa 850°C, einzustellen. Der $H_2$-Gehalt liegt nach dem Zumischen des $H_2$-hältigen Gases beispielsweise bei etwa 80% und der $H_2O$-Gehalt bei etwa 20%.

Im Vorwärm- und Vorreduktionsreaktor 11 werden über eine Zuleitung 13 zugeführte eisenhältige Oxide, und zwar im wesentlichen Hämatit ($Fe_2O_3$), Magnetit ($Fe_3O_4$) und Wüstit (FeO), mittels des $H_2$- und $H_2O$-hältigen Gases vorgewärmt und durch das $H_2$ zu FeO bzw. $Fe_3O_4$ vorreduziert, worauf sie über eine Ableitung 14 abgezogen werden. Das vorreduzierte Material gelangt in einen Bunker 15 und von dort über die Zuleitung 2 in das Schmelzgefäß 1.

Bei der Vorreduktion wird weiterer Wasserdampf gebildet, der gemeinsam mit noch nicht umgesetztem $H_2$ als Topgas über eine Ableitung 16 abgezogen wird. Das Topgas mit einer Zusammensetzung von beispielsweise etwa 60% $H_2$ und etwa 40% $H_2O$ und einer Temperatur von 400°C bis 500°C, beispielsweise etwa 450°C, wird im gezeigten Ausführungsbeispiel über eine Leitung 17 teilweise in das dem Vorwärm- und

Vorreduktionsreaktor 11 zugeführte $H_2$- und $H_2O$-hältige Gas rezirkuliert, wodurch die Temperatur, Menge und der Staubgehalt des $H_2$- und $H_2O$-hältigen Gases reguliert werden können, und zum anderen Teil in einer Entstaubungseinrichtung 18, wie z.B. einem Zyklon, entstaubt. Ein Teilstrom des entstaubten Gases kann ebenfalls, wie in der Zeichnung mit strichlierter Linie 17' angedeutet ist, dem $H_2$und $H_2O$-hältigen Gas zwecks Temperatur- und Mengenregulierung zugeführt werden. Ein weiterer Teilstrom wird über eine Leitung 19 in das dem Schmelzgefäß 1 zugeführte $H_2$hältige Gas rezirkuliert. Die aus dem Topgas abgeschiedenen Staubpartikel werden dem Bunker 15 für das vorreduzierte Material über die Leitung 15' zugeführt.

Das entstaubte Topgas, das noch beträchtliche fühlbare Wärme aufweist, durchläuft einen in der Leitung 19 vorgesehenen Wärmetauscher 20, wobei die fühlbare Wärme des Topgases an das dem Schmelzgefäß 1 zugeführte $H_2$-hältige Gas abgegeben wird. Das Topgas wird danach einem aus einer $H_2$-Quelle, beispielsweise einem chemischen oder biologischen Prozeß, einer Elektrolyse oder einer anderen, weiter unten näher erläuterten $H_2$-Quelle, zugeführten $H_2$hältigen Gas zugemischt. Aus dem Gasgemisch wird anschließend durch Einspritzen von Wasser bzw. durch Kühlen in einem Kühler 21 Wasserdampf auskondensiert. Das nunmehr nahezu 100% $H_2$ enthaltende Gas wird mittels eines Verdichters 22 auf einen Druck von maximal etwa 15 bar verdichtet, im Wärmetauscher 20 mittels der fühlbaren Wärme des Topgases auf maximal 400 bis 500°C erwärmt und dem Plasmabrenner 7 des Schmelzgefäßes 1 zugeführt.

Ein Teilstrom des $H_2$ wird vor dem Erwärmen abgezweigt und über die Leitung 12 dem aus dem Schmelzgefäß 1 abgezogenen $H_2$- und $H_2O$-hältigen Gas zugemischt. Hierdurch wird einerseits der Reduktandenanteil im $H_2$- und $H_2O$-hältigen Gas erhöht und andererseits dessen Temperatur eingestellt. Der Teilstrom des nicht erwärmten $H_2$-hältigen Gases kann auch direkt in den oberen Teil des Schmelzgefäßes 1 eingeleitet werden, wie in der Zeichnung mit strichlierter Linie 12' angedeutet ist.

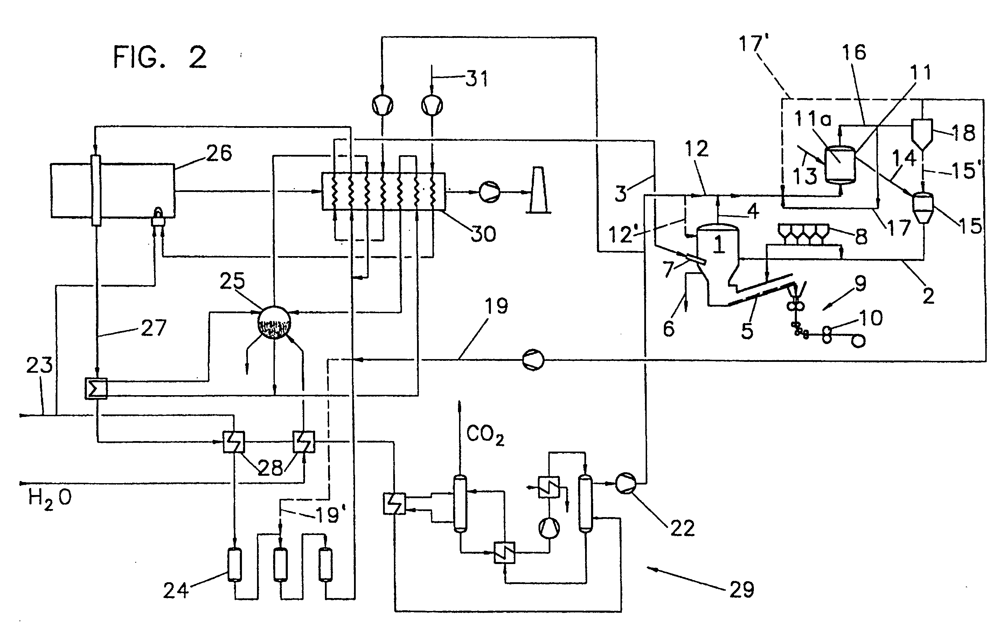

In den Fig. 2 bis 4 sind jeweils bevorzugte Ausführungsformen zur Herstellung des $H_2$hältigen Gases näher dargestellt. Das Schmelzgefäß 1, der Vorwärm- und Vorreduktionsreaktor 11 sowie die jeweiligen Zu- und Ableitungen und Nebenaggregate sind mit den gleichen Bezugszeichen wie in Fig. 1 versehen.

Gemäß Fig. 2 erfolgt die Herstellung des $H_2$-hältigen Gases durch Reformieren von über die Leitung 23 zugeführtem und in einer Entschwefelungsanlage 24 entschwefeltem Erdgas mit in einem Dampfkessel 25 erzeugtem Dampf in einem Reformer 26. Mit einem Überschuß an Wasserdampf wird das bei der Reformierungsreaktion gebildete CO mittels einer CO-Shift-Reaktion weiters zu $H_2$ und $CO_2$ umgesetzt. Das den Reformer 26 verlassende Gas besteht im wesentlichen aus $H_2$, $H_2O$ und $CO_2$. Dieses reformierte Gas wird über die Reformgasleitung 27 mehreren Wärmetauschern 28 zugeleitet, in denen es abgekühlt wird. Die Reformgasleitung 27 mündet sodann in einen $CO_2$-Wäscher 29, worin das reformierte Gas von $CO_2$ und $H_2O$ befreit wird. Es steht nunmehr als im wesentlichen ausschließlich $H_2$ enthaltendes Gas (100% $H_2$) zur Verfügung und wird mittels des Verdichters 22 auf einen Druck von maximal etwa 15 bar verdichtet.

Die fühlbare Wärme der aus dem Reformer 26 austretenden Reformerrauchgase wird in einem Rekuperator 30 genutzt, um das Erdgas nach Durchlaufen der Entschwefelungsanlage 24 sowie den Dampf und die dem Reformer über die Leitung 31 zugeführte Verbrennungsluft vorzuwärmen. Weiters wird im Rekuperator 30 der dem Schmelzgefäß 1 zugeführte Teilstrom des $H_2$-hältigen Gases auf etwa 800 bis 900°C erwärmt, während der dem aus dem Schmelzgefäß 1 austretenden $H_2$- und $H_2O$-hältigen Gas zugeführte Teilstrom nicht erwärmt wird.

Ein Teilstrom des aus dem Vorwärm- und Vorreduktionsreaktor 11 austretenden Topgases wird gemäß Fig. 2 nach einer Entstaubung mittels der Entstaubungseinrichtung 18 über die Leitung 19 dem Erdgas zugemischt, wobei der Wasserdampf des Topgases im Reformer 26 mit dem Erdgas umgesetzt wird. Ein Teil des Topgases kann dem Erdgas bereits beim Durchlaufen der Entschwefelungsanlage 24 zugeführt werden, wie in Fig. 2 mit strichlierter Linie 19' angedeutet ist.

Durch obiges Umsetzen des im Topgas enthaltenen Wasserdampfs im Reformer 26 erübrigt sich eine Entfernung des $H_2O$ aus dem rezirkulierten Topgas.

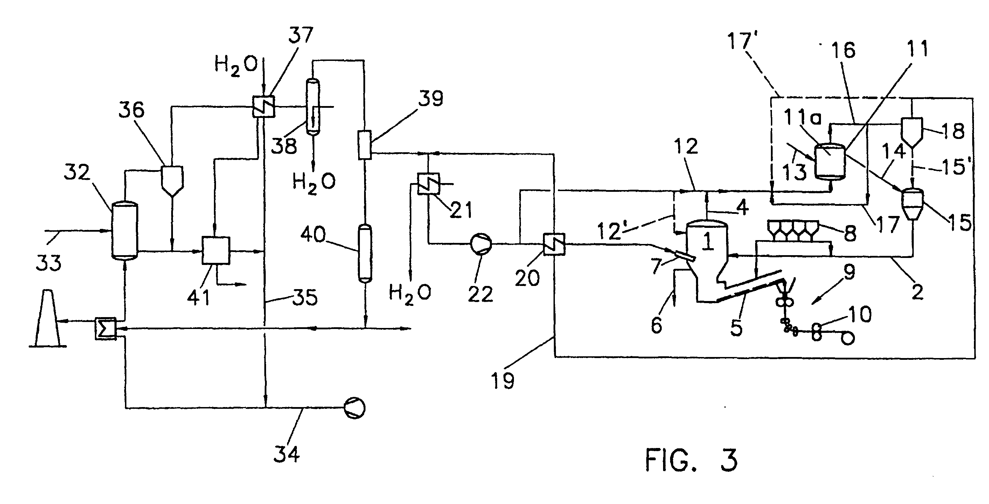

In Fig. 3 ist die Herstellung des $H_2$-hältigen Gases durch autotherme Kohlevergasung näher dargestellt. In einem Kohlevergasungsreaktor 32 wird über eine Leitung 33 zugeführte Kohle mittels über eine Leitung 34 zugeführter Luft und mittels über eine Leitung 35 zugeführten Dampfes vergast, das hierbei entstehende Vergasergas in einer Gasreinigungseinrichtung 36 von Staubpartikeln befreit und in einem Wärmetauscher 37 gekühlt. Sodann wird das im Vergasergas enthaltene $H_2O$ in einem Einspritzkühler 38 ausgewaschen und $CO_2$ sowie $H_2S$ mittels einer Druckwechseladsorptionsanlage 39 entfernt. Das Abgas aus der Druckwechseladsorptionsanlage 39 durchläuft anschließend eine Entschwefelungseinrichtung 40 und steht sodann als Heizgas zur Verfügung. Dampf für die Kohlevergasung wird mittels des Wärmetauschers 37 sowie in einem Dampfkessel 41 erzeugt.

Aus der Druckwechseladsorptionsanlage 39 austretendes, im wesentlichen 100% $H_2$ enthaltendes Gas wird mit einem Teilstrom des Topgases aus dem Vorwärm- und Vorreduktionsreaktor 11 vermischt, worauf das in dem Mischgas noch enthaltene $H_2O$ auskondensiert wird, wie im Zusammenhang mit Fig. 1 beschrieben. Das solchermaßen gereinigte Gas steht sodann als $H_2$-hältiges Gas für das Schmelzgefäß 1 und den Vorwärm-und Vorreduktionsreaktor 11 zur Verfügung.

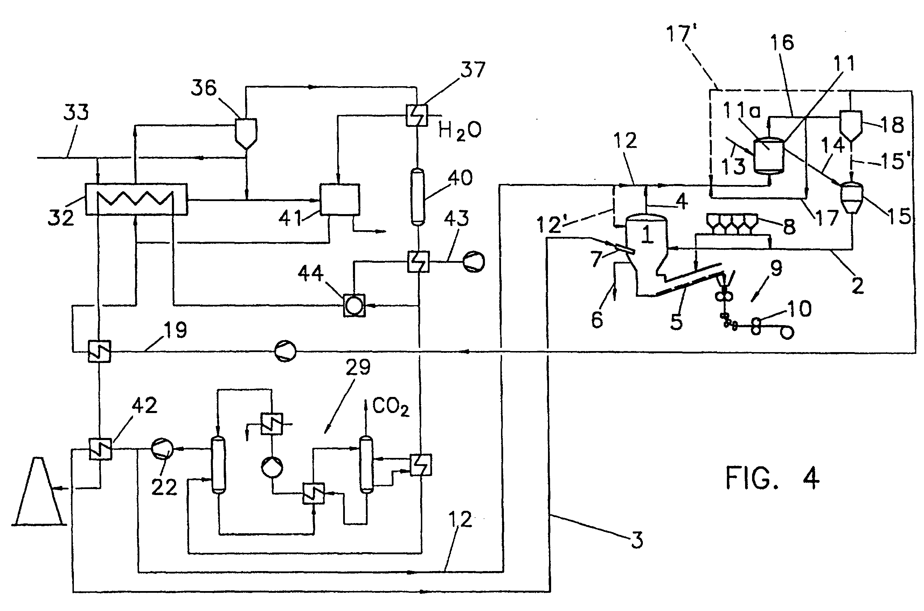

Nach der in Fig. 4 dargestellten Ausführungsform wird das $H_2$-hältige Gas durch allotherme Kohlevergasung hergestellt. Gemäß Fig. 4 wird ein Teilstrom des Topgas aus dem Vorwännund Vorreduktionsreaktor 11 über die Leitung 19 zusammen mit im Dampfkessel 41 erzeugtem Dampf dem Kohlevergasungsreaktor 32 zugeführt, wodurch, ebenso wie bei der Ausführungsform gemäß Fig. 2, der Wasserdampf des Topgases zur Herstellung frischen $H_2$hältigen Gases genutzt wird. Das bei der Kohlevergasung gebildete Vergasergas wind gemäß Fig. 4 in der Gasreinigungseinrichtung 36 von Staubpartikeln befreit, im Wärmetauscher 37 gekühlt, mittels der Entschwefelungseinrichtung 40 entschwefelt und im $CO_2$-Wäscher 29 von $CO_2$ und $H_2O$ befreit. Das so gebildete, im wesentlichen 100% $H_2$ enthaltende Gas wird mittels des Verdichters 22 auf einen Druck von maximal etwa 15 bar verdichtet und ein Teilstrom mittels eines Wärmetauschers 42 auf etwa 800 bis 900°C erwärmt und dem Schmelzgefäß 1 zugeführt, während ein weiterer Teilstrom im nicht erwärmten Zustand dem aus dem Schmelzgefäß 1 austretenden $H_2$- und $H_2O$-hältigen Gas zugemischt wird.

Bei der allothermen Kohlevergasung wird die benötigte Wärme dem Kohlevergasungsreaktor 32 durch Verbrennung eines Teilstroms des Vergasungsgases mit über eine Leitung 43 zugeführter Luft in einem Brenner 44 geliefert.

Selbstverständlich kann auch bei der allothermen Kohlevergasung oder bei der Reformierung von Erdgas eine Druckwechseladsorptionsanlage bzw. bei der authothermen Kohlevergasung ein $CO_2$-Wäscher zur Entfernung von $CO_2$ und gegebenenfalls von $H_2O$ zum Einsatz gelangen.

Weitere mögliche $H_2$-Quellen sind andere technisch umsetzbare chemische oder biologische Prozesse sowie beispielsweise eine Elektrolyse.

Beispiel

Beim erfindungsgemäßen Verfahren werden zur Herstellung von 1 t flüssigem Eisen bzw. flüssigem Stahl etwa 1,43 t eisenhältige Oxide in Form von $Fe_2O_3$ eingesetzt.

Die Reduktion von $Fe_2O_3$ über $Fe_3O_4$ und FeO zu Fe läuft im Vorwärm- und Vorreduktionsreaktor 11 sowie im Schmelzgefäß 1 ab, wobei in Abhängigkeit von den Betriebsparametern Temperatur, Verweildauer und Gaszusammensetzung im Vorwärm- und Vorreduktionsreaktor 11 eine Reduktion von ca. 10% bis ca. 90% der eingesetzten Oxide erfolgt. Im Schmelzgefäß 1 erfolgt sodann das Aufschmelzen und die Fertigreduktion zu metallischem Eisen bzw. Stahl. Bei der Reduktion beträgt der Wasserstoffausnutzungsgrad etwa 40%, wobei zur Herstellung von 1 t flüssigem Eisen bzw. flüssigem Stahl etwa 1500 m$^3$ Wasserstoff zugeführt werden. Wird der Wasserstoff, wie gemäß einer bevorzugten Ausführungsform des erfindungsgemäßen Verfahrens, rezirkuliert, so liegt die zur Herstellung von 1 t flüssigem Eisen bzw. flüssigem Stahl erforderliche Menge in etwa beim stöchiometrischen Wert von ca. 600 $m^3$.

**Patentansprüche**

1. Verfahren zum Herstellen von Eisen, insbesondere Stahl, aus eisenhältigen Oxiden durch eine $H_2$-Schmelzreduktion in einem Schmelzgefäß (1) unter Zufuhr von $H_2$-hältigem Gas und von Energie, mit einer Kombination folgender Maßnahmen:

   - Vorwärmen und Vorreduzieren der eisenhältigen Oxide in mindestens einer Vorwärm-und Vorreduktionszone (11a) mittels eines $H_2$-und $H_2O$-hältigen Gases, welches aus dem Schmelzgefäß (1) abgezogen und, gegebenenfalls nach Zumischen eines mehr als 50%, vorzugsweise mehr als 90%, $H_2$ enthaltenden Gases, der Vorwärm-und Vorreduktionszone (11a) zugeführt wird,
   - Einbringen der vorgewärmten und vorreduzierten eisenhältigen Oxide in das Schmelzgefäß (1), und
   - Einschmelzen und Fertigreduzieren der eisenhältigen Oxide im Schmelzgefäß (1) unter einem mehr als 90% $H_2$ enthaltenden Gas.

2. Verfahren nach Anspruch 1, **dadurch gekennzeichnet, dass** die eisenhältigen Oxide mittels elektrischer Energie eingeschmolzen werden.

3. Verfahren nach Anspruch 1 oder 2, **dadurch gekennzeichnet, dass** als $H_2$-hältiges Gas, abgesehen von Verunreinigungen, 100% $H_2$ eingesetzt wird.

4. Verfahren nach einem der Ansprüche 1 bis 3, **dadurch gekennzeichnet, dass** die eisenhältigen Oxide im Schmelzgefäß (1) kontinuierlich reduziert und eingeschmolzen werden.

5. Verfahren nach einem der Ansprüche 1 bis 4, **dadurch gekennzeichnet, dass** Eisen bzw. Stahl kontinuierlich aus dem Schmelzgefäß (1) ausgebracht wird.

6. Verfahren nach einem der Ansprüche 1 bis 5, **dadurch gekennzeichnet, dass** aus der Vorwärm-und Vorreduktionszone (11a) austretendes $H_2$-und $H_2O$-hältiges Topgas in den Prozess rückgeführt wird.

7. Verfahren nach Anspruch 6, **dadurch gekennzeichnet, dass** das Topgas vor dem Rückführen in den Prozess gereinigt, insbesondere entstaubt, wird.

8. Verfahren nach einem der Ansprüche 1 bis 7, **dadurch gekennzeichnet, daß** das $H_2$hältige Gas mittels eines Reformers (26) durch Reformieren von Erdgas mit Wasserdampf hergestellt wird.

9. Verfahren nach einem der Ansprüche 1 bis 8, **dadurch gekennzeichnet, daß** das $H_2$hältige Gas durch autotherme Kohlevergasung hergestellt wird.

10. Verfahren nach einem der Ansprüche 1 bis 9, **dadurch gekennzeichnet, daß** das $H_2$hältige Gas durch allotherme Kohlevergasung hergestellt wird.

11. Verfahren nach einem der Ansprüche 6 bis 10, **dadurch gekennzeichnet, daß** das $H_2O$ aus dem Topgas entfernt wird und das von $H_2O$ befreite Topgas mit frisch zugeführtem $H_2$hältigen Gas vermischt wird.

12. Verfahren nach Anspruch 8, **dadurch gekennzeichnet, daß** das Topgas in den Reformer (26) eingeleitet wird und der Wasserdampf des Topgases mit dem Erdgas umgesetzt wird.

13. Verfahren nach Anspruch 9 oder 10, **dadurch gekennzeichnet, daß** das Topgas in einen Kohlevergasungsreaktor (32) eingeleitet wird und der Wasserdampf des Topgases mit Kohle umgesetzt wird.

14. Verfahren nach einem der Ansprüche 6 bis 13, **dadurch gekennzeichnet, daß** ein Teil des Topgases in das der Vorwärm- und Vorreduktionszone (11a) zugeführte Gas rückgeführt wird.

15. Verfahren nach Anspruch 14, **dadurch gekennzeichnet, daß** das rückgeführte Topgas oxidativ erwärmt wird.

16. Verfahren nach einem der Ansprüche 2 bis 15, **dadurch gekennzeichnet, daß** im Schmelzgefäß (1) mittels des $H_2$-hältigen Gases und der elektrischen Energie ein Plasma erzeugt wird.

17. Verfahren nach einem der Ansprüche 1 bis 16, **dadurch gekennzeichnet, daß** bei einer Herstellung von Stahl dem flüssigen Stahl in situ im Schmelzgefäß (1) und/oder beim Ausbringen des Stahls aus dem Schmelzgefäß (1) Additive, insbesondere Legierungselemente, zugegeben werden.

18. Verfahren nach einem der Ansprüche 1 bis 17, **dadurch gekennzeichnet, daß** bei einer Herstellung von Stahl der flüssige Stahl beim Ausbringen aus dem Schmelzgefäß (1) überhitzt, desoxidiert, feinlegiert und vakuumbehandelt wird.

19. Verfahren nach einem der Ansprüche 1 bis 18, **dadurch gekennzeichnet, daß** bei einer Herstellung von Stahl der flüssige Stahl kontinuierlich mindestens einer Stranggießanlage (9) zugeführt und kontinuierlich vergossen wird.

20. Verfahren nach einem der Ansprüche 1 bis 19, **dadurch gekennzeichnet, daß** das H$_2$hältige Gas dem Schmelzgefäß (1) mit einer Temperatur von etwa 400 bis 900°C zugeführt wird.

21. Verfahren nach einem der Ansprüche 1 bis 20, **dadurch gekennzeichnet, daß** das H$_2$hältige Gas dem Schmelzgefäß (1) mit einem Druck von maximal etwa 15 bar zugeführt wird.

22. Verfahren nach einem der Ansprüche 1 bis 21, **dadurch gekennzeichnet, daß** das H$_2$und H$_2$O-hältige Gas aus dem Schmelzgefäß (1) mit einer Temperatur von etwa 1600°C abgezogen wird.

23. Verfahren nach einem der Ansprüche 1 bis 22, **dadurch gekennzeichnet, daß** das H$_2$und H$_2$O-hältige Gas aus dem Schmelzgefäß (1) mit einer Zusammensetzung von etwa 60% H$_2$ und etwa 40% H$_2$O abgezogen wird.

24. Verfahren nach einem der Ansprüche 1 bis 23, **dadurch gekennzeichnet, daß** das H$_2$und H$_2$O-hältige Gas der Vorwärm- und Vorreduktionszone (11a) mit einer Temperatur von etwa 800°C bis 1000°C, vorzugsweise etwa 850°C, zugeführt wird.

25. Verfahren nach einem der Ansprüche 1 bis 24, **dadurch gekennzeichnet, daß** das H$_2$und H$_2$O-hältige Gas der Vorwärm- und Vorreduktionszone (11a) mit einer Zusammensetzung von etwa 80% H$_2$ und etwa 20% H$_2$O zugeführt wird.

26. Verfahren nach einem der Ansprüche 1 bis 25, **dadurch gekennzeichnet, daß** das Topgas aus der Vorwärm- und Vorreduktionszone (11a) mit einer Temperatur von etwa 400°C bis 500°C, vorzugsweise etwa 450°C, abgezogen wird.

27. Verfahren nach einem der Ansprüche 1 bis 26, **dadurch gekennzeichnet, dass** das Topgas aus der Vorwärm-und Vorreduktionszone (11a) mit einer Zusammensetzung von etwa 60% H$_2$ und etwa 40% H$_2$O abgezogen wird.

**Claims**

1. Process for the production of iron, in particular steel, from iron-containing oxides by H$_2$ melt reduction in a melting vessel (1) with supply of H$_2$-containing gas and of energy, having a combination of the following measures:

- pre-heating and pre-reduction of the iron-containing oxides in at least one pre-heating and pre-reduction zone (11a) by means of an H$_2$- and H$_2$O-containing gas which is withdrawn from the melting vessel (1) and, if desired after admixing of a gas containing more than 50%, preferably more than 90%, of H$_2$, is fed to the pre-heating and pre-reduction zone (11a),
- introduction of the pre-heated and pre-reduced iron-containing oxides into the melting vessel (1), and
- melting and final reduction of the iron-containing oxides in the melting vessel (1) under a gas containing more than 90% of H$_2$.

2. Process according to Claim 1, **characterized in that** the iron-containing oxides are melted by means of electrical energy.

3. Process according to Claim 1 or 2, **characterized in that** the H$_2$-containing gas employed is, apart from impurities, 100% H$_2$.

4. Process according to one of Claims 1 to 3, **characterized in that** the iron-containing oxides are reduced and melted continuously in the melting vessel (1).

5. Process according to one of Claims 1 to 4, **characterized in that** iron or steel is discharged continuously from the melting vessel (1).

6. Process according to one of Claims 1 to 5, **characterized in that** H$_2$- and H$_2$O-containing top gas leaving the pre-heating and pre-reduction zone (11a) is recycled into the process.

7. Process according to Claim 6, **characterized in that** the top gas is cleaned, in particular dedusted, before recycling into the process.

8. Process according to one of Claims 1 to 7, **characterized in that** the H$_2$-containing gas is produced by means of a reformer (26) by reforming natural gas using steam.

9. Process according to one of Claims 1 to 8, **characterized in that** the H$_2$-containing gas is produced by autothermal coal gasification.

10. Process according to one of Claims 1 to 9, **characterized in that** the H$_2$-containing gas is produced by allothermal coal gasification.

11. Process according to one of Claims 6 to 10, **characterized in that** the H$_2$O is removed from the top gas, and the H$_2$O-freed top gas is mixed with freshly supplied H$_2$-containing gas.

**12.** Process according to Claim 8, **characterized in that** the top gas is fed into the reformer (26), and the steam in the top gas is reacted with the natural gas.

**13.** Process according to Claim 9 or 10, **characterized in that** the top gas is fed into a coal gasification reactor (32), and the steam in the top gas is reacted with coal.

**14.** Process according to one of Claims 6 to 13, **characterized in that** part of the top gas is recycled into the gas fed to the pre-heating and pre-reduction zone (11a).

**15.** Process according to Claim 14, **characterized in that** the recycled top gas is heated oxidatively.

**16.** Process according to one of Claims 2 to 15, **characterized in that** a plasma is generated in the melting vessel (1) by means of the $H_2$-containing gas and the electrical energy.

**17.** Process according to one of Claims 1 to 16, **characterized in that**, in the production of steel, additives, in particular alloying elements, are added to the liquid steel in situ in the melting vessel (1) and/ or during discharge of the steel from the melting vessel (1).

**18.** Process according to one of Claims 1 to 17, **characterized in that**, in the production of steel, the liquid steel is superheated, deoxidized, alloyed and vacuum treated during discharge from the melting vessel (1).

**19.** Process according to one of Claims 1 to 18, **characterized in that**, in the production of steel, the liquid steel is fed continuously to at least one continuous casting plant (9) and cast continuously.

**20.** Process according to one of Claims 1 to 19, **characterized in that** the $H_2$-containing gas is fed to the melting vessel (1) at a temperature of from about 400 to 900°C.

**21.** Process according to one of Claims 1 to 20, **characterized in that** the $H_2$-containing gas is fed to the melting vessel (1) at a maximum pressure of about 15 bar.

**22.** Process according to one of Claims 1 to 21, **characterized in that** the $H_2$- and $H_2O$-containing gas is withdrawn from the melting vessel (1) at a temperature of about 1600°C.

**23.** Process according to one of Claims 1 to 22, **characterized in that** the $H_2$- and $H_2O$-containing gas is withdrawn from the melting vessel (1) with a composition of about 60% of $H_2$ and about 40% of $H_2O$.

**24.** Process according to one of Claims 1 to 23, **characterized in that** the $H_2$- and $H_2O$-containing gas is fed to the pre-heating and pre-reduction zone (11a) at a temperature of from about 800°C to 1000°C, preferably about 850°C.

**25.** Process according to one of Claims 1 to 24, **characterized in that** the $H_2$- and $H_2O$-containing gas is fed to the pre-heating and pre-reduction zone (11a) with a composition of about 80% of $H_2$ and about 20% of $H_2O$.

**26.** Process according to one of Claims 1 to 25, **characterized in that** the top gas is withdrawn from the pre-heating and pre-reduction zone (11a) at a temperature of from about 400°C to 500°C, preferably about 450°C.

**27.** Process according to one of Claims 1 to 26, **characterized in that** the top gas is withdrawn from the pre-heating and pre-reduction zone (11a) with a composition of about 60% of $H_2$ and about 40% of $H_2O$.

**Revendications**

**1.** Procédé de production de fer, en particulier d'acier à partir d'oxydes contenant du fer, par l'intermédiaire d'une réduction par fusion à $H_2$ dans un creuset (1), avec apport d'un gaz contenant $H_2$ et d'énergie, au moyen d'une combinaison des mesures suivantes:

- chauffage et réduction préalables des oxydes contenant du fer dans au moins une zone de chauffage et de réduction préalables (11a), à l'aide d'un gaz contenant du $H_2$ et du $H_2O$, qui est prélevé hors du creuset (1) et qui, le cas échéant après mélange d'un gaz contenant plus de 50%, de préférence plus de 90% de $H_2$, est acheminé à la zone de chauffage et de réduction préalables (11a),
- apport des oxydes contenant du fer chauffés et réduits au préalable dans le creuset (1), et
- fusion et réduction finale des oxydes contenant du fer dans le creuset (1) sous un gaz contenant plus de 90% de $H_2$.

**2.** Procédé selon la revendication 1, **caractérisé en ce que** les oxydes contenant du fer sont fondus à l'aide d'énergie électrique.

**3.** Procédé selon la revendication 1 ou 2, **caractérisé en ce que** l'on utilise, en tant que gaz contenant du

$H_2$, mis à part des impuretés, 100% de $H_2$.

4. Procédé selon l'une quelconque des revendications 1 à 3, **caractérisé en ce que** les oxydes contenant du fer sont réduits et fondus en mode continu dans le creuset (1).

5. Procédé selon l'une quelconque des revendications 1 à 4, **caractérisé en ce que** le fer ou l'acier est extrait en mode continu du creuset (1).

6. Procédé selon l'une quelconque des revendications 1 à 5, **caractérisé en ce qu'**à partir de la zone de chauffage et de réduction préalables (11a), l'on reconduit le gaz de sommet sortant, contenant du $H_2$ et du $H_2O$, au processus.

7. Procédé selon la revendication 6, **caractérisé en ce que** le gaz de sommet, avant le retour dans le processus, est purifié, en particulier dépoussiéré.

8. Procédé selon l'une quelconque des revendications 1 à 7, **caractérisé en ce que** le gaz contenant du $H_2$ est préparé à l'aide d'un reformeur (26), par reformage du gaz naturel à l'aide de vapeur d'eau.

9. Procédé selon l'une quelconque des revendications 1 à 8, **caractérisé en ce que** le gaz contenant du $H_2$ est préparé par gazéification autothermique du charbon.

10. Procédé selon l'une quelconque des revendications 1 à 9, **caractérisé en ce que** le gaz contenant du $H_2$ est préparé par gazéification allothermique du charbon.

11. Procédé selon l'une quelconque des revendications 6 à 10, **caractérisé en ce que** le $H_2O$ est éliminé du gaz de sommet et **en ce que** le gaz de sommet débarrassé du $H_2O$ est mélangé à du gaz alimenté fraîchement, contenant du $H_2$.

12. Procédé selon la revendication 8, **caractérisé en ce que** le gaz de sommet est introduit dans le reformeur (26) et **en ce que** la vapeur d'eau du gaz de sommet entre en réaction avec le gaz naturel.

13. Procédé selon la revendication 9 ou 10, **caractérisé en ce que** le gaz de sommet est introduit dans un réacteur de gazéification du charbon (32) et **en ce que** la vapeur d'eau du gaz de sommet entre en réaction avec le charbon.

14. Procédé selon l'une quelconque des revendications 6 à 13, **caractérisé en ce qu'**une partie du gaz de sommet est reconduite dans le gaz alimentant la zone de chauffage et de réduction préalables (11a).

15. Procédé selon la revendication 14, **caractérisé en ce que** le gaz de sommet reconduit est échauffé par voie d'oxydation.

16. Procédé selon l'une quelconque des revendications 2 à 15, **caractérisé en ce que** l'on produit dans le creuset (1) un plasma à l'aide du gaz contenant du $H_2$ et à l'aide d'énergie électrique.

17. Procédé selon l'une quelconque des revendications 1 à 16, **caractérisé en ce que** l'on ajoute, au cours de la fabrication d'acier, à l'acier liquide in situ dans le creuset (1) et/ou au cours de la décharge de l'acier hors du creuset (1), des additifs, en particulier des éléments d'alliage.

18. Procédé selon l'une quelconque des revendications 1 à 17, **caractérisé en ce que**, lors d'une fabrication d'acier, l'acier liquide, lors de la décharge hors du creuset (1), est soumis à une surchauffe, à une opération de désoxydation, à une opération d'alliage fin et à un traitement sous vide.

19. Procédé selon l'une quelconque des revendications 1 à 18, **caractérisé en ce que**, lors d'une fabrication d'acier, l'acier liquide est alimenté et coulé en continu à l'aide d'au moins une installation de coulée continue (9).

20. Procédé selon l'une quelconque des revendications 1 à 19, **caractérisé en ce que** le gaz contenant du $H_2$ est alimenté au creuset (1) à une température d'environ 400 à 900°C.

21. Procédé selon l'une quelconque des revendications 1 à 20, **caractérisé en ce que** le gaz contenant du $H_2$ est alimenté au creuset (1) avec une pression d'au maximum environ 15 bars.

22. Procédé selon l'une quelconque des revendications 1 à 21, **caractérisé en ce que** le gaz contenant du $H_2$ et du $H_2O$ est extrait du creuset (1) à une température d'environ 1600°C.

23. Procédé selon l'une quelconque des revendications 1 à 22, **caractérisé en ce que** le gaz contenant du $H_2$ et du $H_2O$ est extrait du creuset (1) avec une composition d'environ 60% de $H_2$ et environ 40% de $H_2O$.

24. Procédé selon l'une quelconque des revendications 1 à 23, **caractérisé en ce que** le gaz contenant du $H_2$ et du $H_2O$ est alimenté à la zone de chauffage et de réduction préalables (11a) à une température d'environ 800°C à 1000°C, de préférence d'environ 850°C.

25. Procédé selon l'une quelconque des revendications 1 à 24, **caractérisé en ce que** le gaz contenant du $H_2$ et du $H_2O$ est alimenté à la zone de chauffage et de réduction préalables (11a) avec une composition d'environ 80% de $H_2$ et d'environ 20% de $H_2O$.

26. Procédé selon l'une quelconque des revendications 1 à 25, **caractérisé en ce que** le gaz de sommet est extrait de la zone de chauffage et de réduction préalables (11a) à une température d'environ 400°C à 500°C, de préférence d'environ 450°C.

27. Procédé selon l'une quelconque des revendications 1 à 26, **caractérisé en ce que** le gaz de sommet est extrait de la zone de chauffage et de réduction préalables (11a) avec une composition d'environ 60% de $H_2$ et d'environ 40% de $H_2O$.

FIG. 1

H₂

H₂O

21

22

20

3

12

12'

4

7

1

6

5

9

8

2

13

11

11a

16

17'

14

18

17

15'

15

19

10

19

EP 1 117 844 B1

12

FIG. 2

FIG. 3

EP 1 117 844 B1

FIG. 4

EP 1 117 844 B1

15